# EUROPÄISCHE PATENTANMELDUNG

(11) **EP 1 067 790 A2**
(43) Veröffentlichungstag der Anmeldung: **10.01.2001**
(21) Anmeldenummer: 00112271.2
(22) Anmeldetag: 08.06.2000
(51) Int. Cl.: H04N 7/08

(54) **Verfahren und Vorrichtung zur Datenübertragung mit dem Bildsignal eines Bildfunknetzes**

(30) Priorität: 08.07.1999 DE 19931665
(71) Anmelder: Boehnke, Norbert, 81825 München (DE)
(72) Erfinder: Boehnke, Norbert, 81825 München (DE); Ayakaban, Mustafa, 37079 Göttingen (DE); Althoff, Jürgen, 48429 Rheine (DE)
(74) Vertreter: Cohausz & Florack

(57) **Zusammenfassung**

Die Erfindung betrifft ein Verfahren sowie eine Vorrichtung zur Übermittlung von digitalen Daten, insbesondere Text-, Bild-, Audio-, und Videodateien, mit einen Bildsignal, insbesondere einem TV-Signal eines Bildfunknetzes, wobei das Bildsignal sich aus drei Farbanteilen, insbesondere Rot, Grün, und Blau, zusammensetzt. Die Lösung der Erfindung sieht vor, daß dem Bildsignal eine Signalfolge, bestehend aus datenrepräsentierenden Pegeln, die aus Kombinationen der drei Farbenanteile gebildet werden, durch eine Triggerschaltung so hinzugefügt wird, daß zu allen Zeiten des Bildsignals die datenrepräsentierenden Pegel eingetastet werden können.

## Beschreibung

Die Erfindung bezieht sich auf ein im Oberbegriff des Patentanspruchs 1 näher definiertes Verfahren zur Übermittlung von Daten mit dem Bildsignal eines Bildfunknetzes, sowie eine hierauf gerichtete Vorrichtung.

Bildsignale von heutigen Bildfunknetzen setzen sich aus den drei Farbanteilen Rot, Grün, und Blau zusammen. Für die Übertragung werden diese Farbanteile in Helligkeits-, sowie Farbdifferenzanteile zerlegt. Die Farbdifferenzsignale werden durch Quadraturmodulation eines Farbträgers aufbereitet. Zur Demodulation der Farbinformationen wird mit dem Bildsignal ein Burst (Farbsynchronisationssignal) mitgesendet. Dieser dient der Erzeugung einer Trägerschwingung im Empfänger, mit deren Hilfe durch Synchrondemodulation die Farbdifferenzsignale wiedergewonnen werden.
Den Bildsignalen werden Synchronisationssignale für die horizontale und vertikale Bildsynchronisation hinzugefügt (Austastlücken), um eine einwandfreie Wiedergabe beim Empfänger zu ermöglichen. Zur Datenübertragung werden dem Helligkeitssignal in den dafür festgelegten Zeiten, üblicherweise den Austastlücken, Informationen eingetastet.

Derzeit gib es verschiedene Verfahren zur Übermittlung von Zusatzdaten mit den Bildsignalen von Fernsehsendern:

Das ist zum einen der Videotext (Teletext), bei dem zusätzlich zum Fernsehprogramm textbasierte Informationen in der vertikalen Austastlücke übermittelt werden. Das Übertragungsformat des Videotextes stellt 360 Bit pro Zeile dar. Bedingt durch das Übertragungsprotokoll können pro Zeile netto 280 Bit genutzt werden (40 Buchstaben à 7 Bit). Dies ergibt pro Zeile eine Nettodatenrate von 280 Bit * 25Hz = 7 kBit/s.

Zum anderen ist das Intercast Verfahren ("http://www.intercast.com") bekannt. Auch hier werden Zusatzinformationen mit dem Fernsehprogramm ausgestrahlt. Die Einspeisung der Zusatzinformationen erfolgt ähnlich dem Videotext, wobei hier als Übertragungsprotokoll "Packet 31" genutzt wird. Hiermit können pro Zeile netto 288 Bit genutzt werden. Damit ist pro Zeile eine Nettodatenrate von 288 Bit * 25 Hz = 7,2 kBit/s möglich.

Beide Verfahren nutzen für die Zusatzdatenübertragung die vertikale Austastlücke des Bildsignals.

Aus DE 195 22 590 ist es weiterhin bekannt, für die Zusatzdatenübertragung die Synchronisationssignale für die horizontale Bildstabilität zu nutzen. Hierin wird ein Verfahren zur Zusatzdatenübertragung ausgehend von Zeilenimpulsen durch Auszahlen und Bewerten informationsfreier Bereiche (S 6 Z 14) beschrieben. Dieses System wird unter der Bezeichnung "Broadcast Online TV" (BOT) vertrieben (Aufsatz, R. W. Lorenz, A. Finger, "Broadcast Online TV - Gateway to Data Broadcast Services", "http://www.entlwa.et.tu-dresden.de/montreux.htm").

Alle genannten Verfahren nutzen für die Zusatzdatenubertragung ausschließlich die Synchronisationssignale des Luminanz-Signals. Es werden die für die Zusatzdatentibertragung zur Verfügung stehenden Farbdifferenzsignale nicht in Betracht gezogen, was eine enorme Verschwendung von Übertragungskapazitäten bedeutet.

Der Erfindung liegt die Aufgabe zugrunde, die Übertragungskapazität für Datenübertragungen, unter Berücksichtigung von Qualitätsvoraussetzungen, bei hohen Übertragungsraten, einer großen Übertragungssicherheit, und leichter Integration in bestehende Systeme, besser auszunutzen.

Die Erfindung löst diese Aufgabe mit einem im Patentanspruch 1 gekennzeichneten Verfahren. Durch die Nutzung der Farbanteile wird die gesamte Kanalkapazität ausgenutzt. Dadurch kann im Gegensatz zu bestehenden Systemen eine erheblich größere Übertragungsbandbreite genutzt werden.

Eine bevorzugte Weiterbildungsmöglichkeit des erfindungsgemäßen Verfahrens ist dadurch gekennzeichnet, daß die eingetasteten datenrepräsentierende Pegel aus Linearkombinationen der drei Farben bestehen, wobei den Farben jeweils mindestens zwei Intensitätsstufen (Quantisierungsstufen) zugeordnet werden können.

Eine zusätzliche Weiterbildungsmöglichkeit des erfindungsgemäßen Verfahrens ist dadurch gekennzeichnet, daß die Daten zu Zeiten der vertikalen Austastlücke eingetastet werden. Dadurch kann unabhängig von der Datenübertragung auch noch eine Bewegtbildübertragung stattfinden. Außerdem können zusätzlich zum beschriebenen Videotext-Verfahren weitere Daten übertragen werden.

Eine andere Weiterbildungsmöglichkeit des erfindungsgemäßen Verfahrens ist dadurch gekennzeichnet, daß die Daten zu Zeiten der horizontalen Austastlücke eingetastet werden. Auch dadurch kann unabhängig von der Datenübertragung eine Bewegtbildübertragung stattfinden.

Eine weitere Ausführungsmöglichkeit des erfindungsgemäßen Verfahrens besteht darin, daß die Daten anstelle des Bewegtbildsignals eingetastet werden. Der Anteil des Bildsignals, der üblicherweise für die Nutzdaten, hier die tatsächlichen Bilder, genutzt wird, wird durch diese Weiterbildung zur Übertragung von datenrepräsentierenden Pegeln genutzt. Dadurch können sehr große Datenmengen übertragen werden, wodurch es z.B. möglich ist, anstelle eines analogen TV-Kanals, eine Vielzahl von digitalen TV-Kanälen bei gleicher Ressourcenauslastung zu übertragen.

Eine erfindungsgemäße Vorrichtung die zur Übertragung von digitalen Daten, insbesondere Text-, Bild-, Audio-, und Videodateien, mit einen Bildsignal, insbesondere einem TV-Signal eines analogen Bildfunknetzes, wobei das Bildsignal sich aus drei Farbanteilen, insbesondere Rot, Grün, und Blau, zusammensetzt, geeignet ist, ist dadurch gekennzeichnet, daß sie Mittel enthalt, die dem Bildsignal eine Signalfolge, bestehend aus datenrepräsentierenden Pegeln, die aus Kombinationen der drei Farbenanteile gebildet werden, durch eine Triggerschaltung so hinzufügt, daß zu allen Zeiten des Bildsignals die datenrepräsentierenden Pegel eingetastet werden können. Das bietet den Vorteil einer kostengünstigen und leichten Integration in bestehende Systeme.

Nachfolgend wird die Erfindung anhand eines Ausführungsbeispiels mit den dazugehörigen Zeichnungen erläutert;
- Fig. 1: zeigt den senderseitiger Aufbau zur Einspeisung der Daten.
- Fig. 2: zeigt den empfängerseitigen Aufbau zur Rückgewinnung der Daten.
- Fig. 3: zeigt die zu übertragenden Symbole für den Fall, daß den Farben zwei Intensitätsstufen zugeordnet werden können.

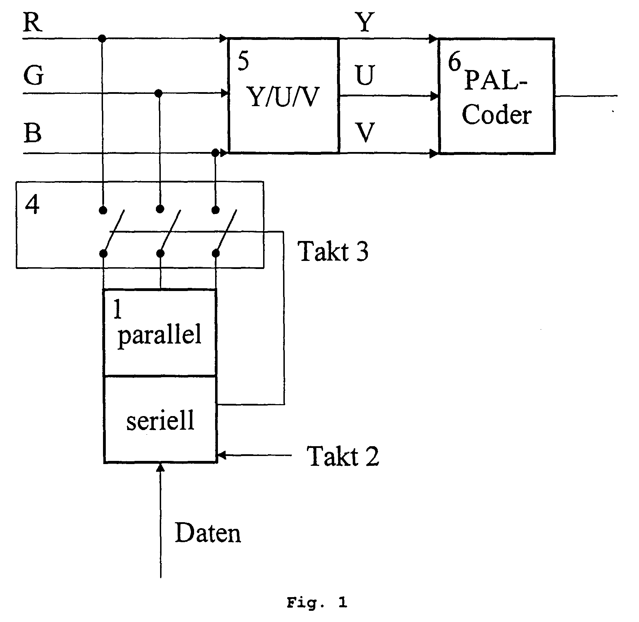

Aus Fig. 1 ist zu erkennen, daß die zu übertragenden Daten in einer Schaltung 1 so aufbereitet werden, daß diese von einer Triggerschaltung 4 parallel abgerufen werden können. Der Schaltung 1 werden die Synchronisierzeichen eines FBAS-Signals über einen Taktgeber 2 zugeführt. Mit diesen Synchronisierzeichen wird die Triggerschaltung 4 so gesteuert, daß die Daten nur zu den erlaubten Zeitpunkten dem Bildsignal zugeführt werden. Die in Schaltung 1 gemäß einer vorher festgelegten Quantisierungsregel erzeugten datenrepräsentierende Pegel werden in ein RGB Signal durch die Triggerschaltung 4 eingetastet. Das so entstandene RGB Signal wird anschließend in den Schaltungen 5 und 6 in ein PAL Signal umgewandelt, daß über Breitbandkabel oder terrestrische Sendeanlagen ausgestrahlt wird.

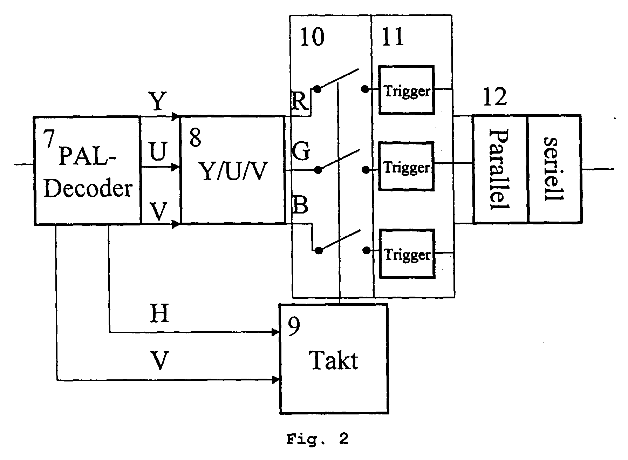

In Fig. 2 ist der empfängerseitige Aufbau einer erfindungsgemäßen Vorrichtung dargestellt. Ein empfangenes PAL Signal enthält neben dem Bildsignal zusätzliche Synchronisationszeichen H und V für die horizontale sowie vertikale Synchronisation. Diese werden einem Taktgeber 9 zugeführt. Das PAL Signal wird in den Schaltungen 7 und 8 in ein RGB Signal umgewandelt. Eine Triggerschaltung 10 wird durch einen Taktgeber 9 so angesteuert, daß diese, zu den Zeiten an denen Daten erwartet werden, das RGB Signal austastet. In den Schaltungen 11 wird die Quantisierungsstufe eines gesendeten Farbanteils durch Interpretation der Intensität des Farbsignals ermittelt. In einer Schaltung 12 wird aus den Quantisierungsstufen der Farbinformationen das gesendete Symbol ermittelt und derart aufbereitet, daß die Daten von einer angeschlossenen, nicht dargestellten, Datenverarbeitungsanlage ausgewertet werden können.

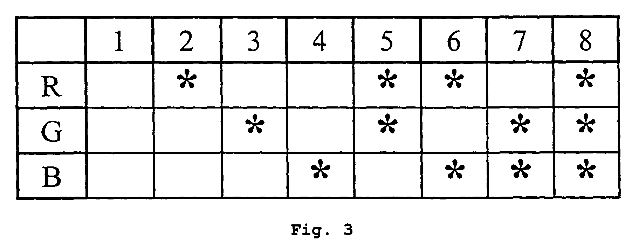

In Fig. 3 sind alle möglichen Rekominationen bei einer Quantisierung der Farben mit nur einem Bit dargestellt. Es ergeben sich bei drei Farben und jeweils zwei Zuständen maximal 2^3 = 8 verschiedene datenrepräsentierende Pegel. Die datenrepräsentierende Pegel 1 und 8 werden vom heutigen Videotext genutzt. Durch die Erweiterung auf die Farbanteile des PAL Signals können zusätzlich zum Videotext 6 weitere Zustände übertragen werden. Die Übertragungsraten ergeben sich wie folgt:

Ein FBAS-Signal besteht aus 720 Bildpunkten pro Zeile und 625 Zeilen. Das Studiosignal, daß von einer Fernsehkamera geliefert wird, besteht aus 720 Bildpunkten für das Helligkeitssignal und 2*360 Punkten für das Farbdifferenzsignal. Das Helligkeitssignal enthält 220 Quantisierungsstufen, das Farbdifferenzsignal 225 Quantisierungsstufen. Dies entspricht einer Auflösung von 7 Bit pro Bildpunkt für das Helligkeits- bzw. das Farbdifferenzsignal. Daraus ergibt sich für eine Zeile mit 720 Helligkeits-, und 720 Farbifferenz-Informationen eine Datenmenge von (720 + 720) * 7 Bit = 10.080 Bit/ Zeile. Die Bildwiederholfrequenz beträgt 25 Hz. Somit ergibt sich pro Zeile eine Datenrate von 10.080 Bit * 25 Hz = 0,252 Mbit/(s*Zeile) . Für das Gesamtbild mit 625 Zeilen ergibt sich damit eine Datenrate von 0,252 Mbit/(s*Zeile)*625 Zeilen= 157,5 Mbit/s. Bestehen die Farben nur aus zwei Intensitätstufen, so ergibt sich pro Bildpunkt eine Auflösung von 1 Bit. Daraus folgt eine minimale Übertragungsrate von 157,5 Mbit/s:7 = 22,5 Mbit/s. Wird dieses Verfahren ausschließlich in der vertikalen Austastlücke, die aus 32 Zeilen besteht, eingesetzt so ergibt sich eine Datenrate von 22,5 Mbit/s*32 Zeilen/625 Zeilen = 1,152 Mbit/s.

Durch die beim PAL Verfahren genutzte Phasendrehung des Farb-Burst von +/- 45° gegenüber der Trägerphase, die zur Korrektur von Phasenfehlern genutzt wird, kann von einer sicheren Rückgewinnung der Informationen, auch bei einer Quantisierung mit mehr als einem Bit, ausgegangen werden.

Die Einbeziehung des derzeit nicht genutzten Farbanteils des Bildsignals erhöht einerseits die Kanalkapazität enorm, andererseits kann dieses Verfahren auch neben den bereits existierenden Verfahren genutzt werden, ohne daß Kompatibilitätsprobleme auftreten. Außerdem läßt sich dieses Verfahren in einfacher und kostengünstiger Weise realisieren.

Die Übertragung von Bildsignalen in analogen Bildfunknetzen, bei denen sich das Bildsignal aus drei Farbariteilen, insbesondere Rot, Grün, und Blau, zusammensetzt, bietet neben der Bewegtbildübertragung die Möglichkeit der Datenübertragung, insbesondere Text-, Bild-, Audio-, und Videodateien, durch Nutzung der Farbanteile das Bildsignals. Bei heutigen Datenübertragungsverfahren wird ausschließlich die Helligkeitskomponente des Bildsignals genutzt.

Der Erfindung liegt die Aufgabe zugrunde, die Übertragungskapazität für Datenübertragungen bei einer großen Übertragungssicherheit, und leichter Integration in bestehende Systeme, besser auszunutzen.

Die Daten werden erfindungsgemäß dem Bildsignals unter Ausnutzung der Farbanteile beigemischt. Dies geschieht durch Eintastung von datenrepräsentierende Pegeln, die sich aus Kombinationen der Farbanteile zusammensetzen, in das RGB Bildsignal.

## Patentansprüche

1. Verfahren zur Übermittlung von digitalen Daten, insbesondere Text-, Bild-, Audio-, und Videodateien, mit einen Bildsignal, insbesondere einem TV-Signal eines Bildfunknetzes, wobei das Bildsignal sich aus drei Farbanteilen, insbesondere Rot, Grün, und Blau, zusammensetzt,
**dadurch gekennzeichnet**, daß dem Bildsignal eine Signalfolge, bestehend aus datenrepräsentierenden Pegeln, die aus Kombinationen der drei Farbenanteile gebildet werden, durch eine Triggerschaltung so hinzugefügt wird, daß zu allen Zeiten des Bildsignals die datenrepräsentierenden Pegel eingetastet werden können.

2. Verfahren nach Anspruch 1,
**dadurch gekennzeichnet**, daß die datenrepräsentierenden Pegel aus Linearkombinationen der drei Farbenanteile bestehen, wobei den einzelnen Farben mindestens zwei Intensitätsstufen zugeordnet werden können.

3. Verfahren nach einem der vorhergehenden Ansprüche, bei dem das Bildsignal ein Synchronisationszeichen für die Bildkippfrequenz (vertikale Austastlücke) enthält,
**dadurch gekennzeichnet**, daß die Daten zu Zeiten der vertikalen Austastlücke eingetastet werden.

4. Verfahren nach einem der vorhergehenden Ansprüche, bei dem das Bildsignal ein Synchronisationszeichen für die Zeilenfrequenz (horizontale Austastlücke) enthalt,
**dadurch gekennzeichnet**, daß die Daten zu Zeiten der horizontalen Austastlücke eingetastet werden.

5. Verfahren nach einem der vorhergehenden Ansprüche,
**dadurch gekennzeichnet**, daß anstelle des Bewegtbildsignals die datenrepräsentierenden Pegel zu den Zeiten des Bewegtbildes eingetastet werden.

6. Vorrichtung zur Übermittlung von digitalen Daten, insbesondere Text-, Bild-, Audio-, und Videodateien, mit einen Bildsignal, insbesondere einem TV-Signal eines Bildfunknetzes, wobei das Bildsignal sich aus drei Farbanteilen, insbesondere Rot, Grün, und Blau, zusammensetzt, nach einem der vorhergehenden Ansprüche,
**dadurch gekennzeichnet**, daß die Vorrichtung Mittel enthält, dem Bildsignal eine Signalfolge, bestehend aus datenrepräsentierenden Pegeln, die aus Kombinationen der drei Farbenanteile gebildet werden, durch eine Triggerschaltung so hinzuzufügen, daß zu allen Zeiten des Bildsignals die datenrepräsentierenden Pegel eingetastet werden können.
